# EUROPEAN PATENT APPLICATION

(11) **EP 2 889 636 A1**
(43) Date of publication of application: **01.07.2015**
(21) Application number: 13199605.0
(22) Date of filing: 24.12.2013
(51) Int. Cl.: G01S 5/02, G01S 13/74, G01V 15/00, G07C 9/00

(54) **Localisation system**

(71) Applicant: Televic Healthcare NV, 8870 Izegem (BE)
(72) Inventor: Crombez, Pieter, 8820 Torhout (BE); Gesquiere, John, 8970 Poperinge (BE)
(74) Representative: Beck, Michaël Andries T.

(57) **Abstract**

The invention pertains to an identification tag (100) for use in a location system for determining a location of the identification tag, the identification tag comprising: an ultrasound receiver module (110) configured to convert an ultrasound signal emitted by a first beacon at a first frequency into a first electrical signal; a magnetic induction module (120) configured to convert a varying magnetic field emitted by a second beacon at a second frequency into a second electrical signal; and a processing module (130) adapted to decode said first electrical signal and said second electrical signal and to extract information therefrom. The identification tag is configured to use said extracted information to produce a location signal. The first frequency is substantially equal to said second frequency. The ultrasound receiver module (110) and the magnetic induction module (120) have identical analog PHY circuits.

## Description

### Field of the Invention

The present invention relates to a wireless localisation system for movable objects or persons, such as a system to track the location of patients and/or assets in a facility such as a hospital, and an identification tag for use in such a system.

### Background

WO 2004/051303 Al discloses a method and a system for monitoring and position determination of objects and/or living beings within an area, such as, e.g. a room in a building or a road tunnel. The system comprises a plurality of identification tags equipped with an ultrasonic receiver and radio transmitter which is attached to the objects that have to be monitored. The identification tags receive ultrasonic signals whose arrival time they measure. This information together with the identification tags' ID code are transmitted by radio waves to a central unit which calculates the position of each of the identification tags.

It is a requirement of this system that the tags include an ultrasonic receiver and a radio transmitter, while preferably remaining extremely portable, even wearable. This poses a significant miniaturisation problem. It is a further disadvantage of the known system that it does not offer sufficiently high spatial accuracy to provide true access/exit control, nor sufficiently high temporal accuracy to allow for immediate responses to critical tracking events.

European patent application EP 2 469 298 Al in the name of the present applicant, discloses a method and device for determining location of a target, using mobile tags and fixed beacons, wherein the target location is estimated from a weighted sum of the indications of the received signal power of at least two received signals. It is a disadvantage of this system that multiple received signals must be available to perform RSSI triangulation.

### Summary of the Invention

According to an aspect of the present invention, there is provided an identification tag for use in a location system for determining a location of the identification tag in an area to be monitored, the identification tag comprising: an ultrasound receiver module configured to convert an ultrasound signal emitted by a first beacon at a first frequency into a first electrical signal, the ultrasound receiver module having a first analog PHY circuit; a magnetic induction module configured to convert a varying magnetic field emitted by a second beacon at a second frequency into a second electrical signal, the magnetic induction module having a second analog PHY circuit; and a processing module adapted to decode the first electrical signal and the second electrical signal and to extract information therefrom; wherein the identification tag is configured to use the extracted information to produce a location signal; wherein the first frequency is substantially equal to the second frequency; and wherein the first analog PHY circuit and the second analog PHY circuit are identical circuits.

It is an advantage of the present invention that the hardware architecture of the tag can be made much more efficient when a common base frequency is used on both data transmission media. In particular, by using a common base frequency for both transmission technologies, important parts of the analog front-end, including the crystal oscillator, may be shared or made identical. As the common processing module interfaces with both receivers, the resulting tag can be made smaller and less costly, and will consume less energy.

In an embodiment, the identification tag according to the present invention further comprises a redundancy module, identical to the ultrasound receiver module, and the processing module is further adapted to process a signal received from said redundancy module in the event of a failure of said receiver module.

In this setup, the redundancy module, identical to the first ultrasound receiver module, can be used to provide redundancy in the event of a failure of the first module, in particular a hardware failure.

In an embodiment, the identification tag according to the present invention further comprises a redundancy module configured to convert said ultrasound signal into a third electrical signal, and the processing module is further adapted to process the first electrical signal and the third electrical signal in a coordinated way.

By "coordinated", it is meant that both signals are demodulated in a synchronized way, and that the consecutive received symbols of the respective receivers are combined to obtain a better estimate of the transmitted symbol. Thus, in this setup, the identification tag can benefit from vectored receiving methods, such as beam forming or "MIMO" techniques. These methods are particularly useful to overcome impairments in multipath transmission channels, such as free-space acoustic channels.

In an embodiment of the identification tag according to the present invention, the first frequency and the second frequency are substantially equal to 40 kHz.

The inventors have surprisingly found that this frequency provides adequate characteristics in the desired application, both for ultrasound transmission and for magnetic induction communication.

In an embodiment of the identification tag according to the present invention, the analog PHY circuits are adapted to demodulate the first electrical signal and the second electrical signal according to a Frequency Shift Keying (FSK) scheme.

It is an advantage of this coding scheme that it is robust and insensitive to natural variations in the attenuation caused by the used transmission media.

In a particular embodiment, the scheme is 2-FSK. This transmission scheme is particularly simple to implement and robust.

In an embodiment of the identification tag according to the present invention, the processing module is further adapted to perform an error detection algorithm or an error correction algorithm on the extracted information.

It is an advantage of this embodiment that yet another important function can be shared efficiently between the different communication technologies. The actual error detection algorithm or error correction algorithm may use different parameters depending on which signal is being processed. Known error detection algorithms include cyclic redundancy checks (CRC). Known forward error correction algorithms include Reed-Solomon algorithms.

In an embodiment, the identification tag according to the present invention further comprises a radio transmitter configured to transmit an identification element derived from the first electrical signal.

While the magnetic induction module could be used for two-way communication between the beacon and the tag, the radio transmitter provides a further wireless return channel for the tag to communicate to the beacon, and hence to the monitoring system, at a higher data rate and longer range.

In an embodiment, the identification tag according to the present invention is further adapted to modify a sensitivity of the magnetic induction module, so as to obtain different detection ranges for the varying magnetic field.

According to an aspect of the present invention, there is provided a system comprising at least one beacon adapted to emit the ultrasound signal and/or the varying magnetic field, and an identification tag as described above.

According to an aspect of the present invention, there is provided a computer program product comprising code means adapted to cause a processor to select a signal from among a first input signal and a second input signal, decode the selected signal, and extract information therefrom; wherein the first input signal and the second input signal represent respective physical signals having a same base frequency. The computer program product is suitable for use in a processor implementing the processing module in an identification tag as described above.

In an embodiment of the computer program product according to the present invention, the code means are further adapted to produce a location signal from the extracted information.

The technical effects and advantages of embodiments of the system and the computer program product according to the present invention correspond *mutatis mutandis* to those of the corresponding embodiments of the identification tag according to the invention.

### Brief Description of the Figures

These and other features and advantages of embodiments of the present invention will now be described in more detail with reference to the accompanying drawings, in which:
- Figure 1 schematically illustrates a localisation system comprising beacons and tags according to an embodiment of the present invention; and
- Figure 2 schematically illustrates elements of an identification tag according to an embodiment of the present invention.

### Detailed Description of Embodiments

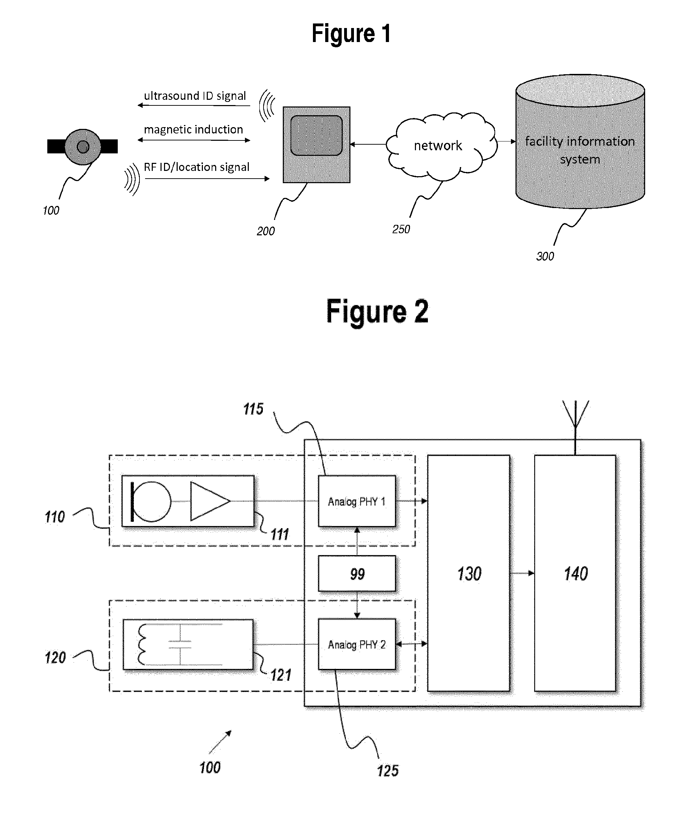

Figure 1 schematically illustrates a location system comprising beacons and tags according to an embodiment of the present invention.

A specific application of the location system described herein is a wireless nurse call system for use in hospitals and other institutions where patients may move about, possibly without being fully conscious of their own exact location. Where appropriate, the invention will be described with reference to such a nurse call system, without intent to limit the scope of the invention to such applications. In the context of a wireless nurse call system, the development of efficient hardware is an important goal, with a view to reducing (battery) power consumption, obtaining a small form factor, and keeping the total cost as low as possible.

Additionally, the system should provide a very accurate determination of the tag's location, both in the spatial dimension (high spatial accuracy) and in the time dimension (low latency tracking), such that adequate responses to tracking events can be deployed immediately and at the right place.

In the preferred localisation system, beacons **200** are provided at fixed locations throughout an area in which the location of mobile objects or persons is to be monitored. The beacons may generally be mounted to walls, doors, pillars, and the like. They may have a basic user interface comprising a display and one or more keys.

The beacons emit an identification element modulated onto an ultrasound signal. Ultrasound communication is based on electromechanically induced vibrations that generate propagating longitudinal acoustic waves. As ultrasound waves are, by definition, in a frequency range beyond the audible range for humans, their use is no hindrance to humans present in the monitored area.

Within building environments, ultrasound waves are almost completely blocked by walls (contrary to electromagnetic waves). Ultrasound waves are therefore a suitable signal type to obtain room-level localisation accuracy.

The mobile objects or persons to be monitored are provided with identification tags (hereinafter also referred to as "tags") **100** according to an embodiment of the present invention, which comprise an ultrasound receiver.

Due to the electromechanical nature of ultrasound transmission and reception processes, these processes consume relatively large amounts of electrical power. As the tags **100** would have to be battery-powered to be sufficiently mobile and preferably even wearable, power consumption is a significant concern. It is an advantage of embodiments of the present invention that the overall power consumption in an ultrasound-based tag system can be reduced, which leads to a longer operational autonomy period and/or smaller form factor for the tags.

Upon receiving the beacon identification element encoded in the ultrasound signal, the tag **100** will be aware of its location (in the sense of being able to identify the nearest beacon **200)** down to room-level accuracy, without any need for triangulation.

The tag **100** may further comprise communication means to relay the decoded beacon identification element, along with its own identity, to the central monitoring system. The communication means may include a radio frequency (RF) transmitter adapted to wirelessly communicate the information to a beacon (the same beacon whose identification element was received and/or another beacon within radio range), which is in turn preferably connected to a wired or wireless network **250** that allows it to communicate with a centralized management system **300.**

As the range of the RF transmission is also limited in practice, the identity of the beacon **200** at which the radio signal of the tag **100** is received provides another clue to the location of the tag **100.** This localisation step is coarser than the ultrasound-based localisation, because the range of an RF transmission with typical properties (e.g., using the legally permitted transmit power in the unlicensed ISM bands at 434 MHz, 2.4 GHz, or 5 GHz, or the SRD860 band) will be longer than that of an ultrasound transmission, and will in particular not significantly be constrained by walls. The combination of RF-based localisation at a coarse level and ultrasound-based localisation at a finer level allows for a cellular naming system for the beacons; i.e., the beacon identities transmitted in the ultrasound signal need only be unique within the set of beacons with overlapping ultrasound communication ranges. This allows for a shorter "beacon identity" field to be used in the messages conveyed by the ultrasound signals, which in turn leads to a lower average data rate and thus lower power consumption at the transmitter (beacon) and the receiver (tag). Further details on this aspect of the invention may be found in European patent application no. 13199601.9 in the name of the present applicant and filed on the same day as the present application, the description of which is incorporated by reference for this purpose.

A further purpose of the tags according embodiments of the present invention is to detect proximity to sensitive points in the monitored area, such as doors or gates between divisions of a building or building complex, and places where critical objects are kept (e.g., emergency equipment or drugs). This function requires a localisation mechanism that is even more accurate than the ultrasound-based system described above. Embodiments of the present invention are based *inter alia* on the insight of the inventors that this goal can be met by using magnetic induction to achieve very short-range detection and communication (a typical range extends from approximately 10 cm to approximately 1 m; for some applications, a range up to 5 m may be used). To this end, the beacons are adapted to receive an additional signal by means of magnetic induction, in the form of a varying magnetic field.

In embodiments of the present invention, the tag comprises a coil, coupled to an appropriately tuned electronic circuit to convert a detected varying magnetic field having a specific target frequency into an electrical signal that may be further processed. The electronic circuit is preferably designed in such a way that it can be deliberately and reversibly detuned (in particular, by dynamically switching an additional capacitance or inductance into the tuning circuit by means of appropriately controlled transistors). By detuning the tuning circuit, the effective range of the magnetic inductance receiver can be deliberately reduced. This allows the tag to discriminate between "general proximity" to the beacon (e.g., walking past a beacon while wearing a tag) and "extreme proximity" to the beacon (e.g., holding the tag up close to the beacon's housing), because any signal received in reduced sensitivity mode is indicative of being in very close range (extreme proximity) of the beacon. Depending on the desired application, the "general proximity" may be used to trigger an alert that somebody is approaching a sensitive zone, such as an exit which a monitored person is not authorized to use (thus, it may be detected when patients wander out of their ward or their designated zone). Depending on the desired application, the "extreme proximity" may be used as a trigger to perform an authentication that may lead to the opening of a door or a gate and the like. In embodiments of the present invention, the beacon may indicate its type in the signal it emits by magnetic induction. The tag may be configured to detune its magnetic induction circuit as described above only when receiving an indication that the beacon is of a type that requires extreme proximity to trigger a particular action. Further details on this aspect of the invention may be found in European patent application no. 13199600.1 in the name of the present applicant and filed on the same day as the present application, the description of which is incorporated by reference for this purpose.

While the combination of different physical layer communication technologies meets the desired functional requirements of the localisation system, such hybridization typically comes at the cost of increased power consumption, increased tag area, and increased cost. This is because the traditional approach involves providing a dedicated and different transceiver (a "radio" or "modem") per technology, in function of the specific characteristics of the respective communication links, which transceivers are placed next to each other on the printed circuit board.

Embodiments of the present invention are based on the insight that a more efficient hardware solution may be obtained for the tag by using identical analog PHY circuits for both receivers and a common hardware front-end for the ultrasound receiver and for the magnetic-inductive transceiver.

The resulting architecture will be described with reference to Figure 2. Figure 2 schematically illustrates an identification tag **100** for use in a location system for determining a location of the identification tag in an area to be monitored, the identification tag comprising an ultrasound receiver module **110** configured to convert an ultrasound signal emitted by a first beacon at a first frequency into a first electrical signal; a magnetic induction module **120** configured to convert a varying magnetic field emitted by a second beacon at a second frequency into a second electrical signal; and a processing module **130** adapted to demodulate the first electrical signal and the second electrical signal and to extract information therefrom; wherein the identification tag **100** is configured to use the extracted information to produce a location signal. The first frequency is substantially equal to the second frequency. The ultrasound receiver module **110** and the magnetic induction module **120** include identical analog PHY circuits **115, 125.**

As the invention can be understood without reference to common elements like the battery, power manager, user interface, and the like, these elements have not been included in Figure 2, to keep the latter clear.

The common front-end or processing module **130** performs synchronization and decodes the respective electrical signals obtained from the electromechanical (ultrasound) signal and the electromagnetic (magnetic induction) signal. Hence, the hardware used to convert the ultrasound waves into an electrical signal, herein also referred to as the ultrasound receiver module **110,** and the hardware used to perform magnetic induction coupling, herein also referred to as the magnetic induction module **120,** are both coupled to the same processing module **130.** The processing module **130** is further connected to means **140** to determine and broadcast the tag's location, including the RF transmitter.

While the ultrasound receiver module **110** and the magnetic induction module **120** comprise different channel-facing components **111, 121** in view of the requirement to obtain signals from different physical media, they further each include an identical analog PHY circuit **115, 125.** The analog PHY circuits perform the tasks of filtering, amplifying, and/or A/D converting (demodulating) the received signals. Subsequently, the processing module **130** decodes the digital signals, so as to retrieve or extract the transmitted information.

The analog PHY circuits **115, 125** may be made identical because the same base frequency is used for transmission on the respective media. The respective analog PHY circuits **115, 125** preferably receive their timing signals from a common crystal oscillator **99.** Preferably, the modulation scheme is also common; accordingly, the demodulation can take place in a fully analogous way in both analog PHY circuits **115, 125.**

Analog PHY circuits **115, 125** may be provided as separate but identical integrated hardware components, such as ASICs. These components may allow a minimal degree of customization or configuration by appropriately setting certain configuration register values. In that case, it is possible to use different data rates or different modulation schemes on both media, while still benefiting from the use of identical hardware components for both circuits.

The non-identical part of the respective modules **110, 120** is designated by reference numbers **111** and **121.** The ultrasound receiver module **110** has a channel interface **111** comprising mainly a microphone element with an appropriate frequency response for the used ultrasound signals. The magnetic induction module **120** has a channel interface **121** comprising mainly a coil or ferrite antenna and a resonance circuit. These components, and the necessary ancillary components, are only illustrated schematically.

The processing module **130** can process the signals from the ultrasound receiver module **110** and the magnetic induction module **120,** which leads to an optimal re-use of hardware. The resulting total power consumption is lower than when two separate complete transceivers are used, and the dimensions of the resulting tag **100** are smaller. It is immediately clear that the development risk and cost of the combined processing module **130** are lower than those of separate components.

To enable the use the same processing on both signals, the signals should have common characteristics, apart from the physical form in which they are transmitted. Both signals should have the same base frequency, such that the analog PHY circuits can use the same timing signal from a single crystal. The inventors have found that, surprisingly, a base frequency of 40 kHz gives good results for both the ultrasound transmission (adequate reception, sufficient blocking by walls, may be implemented in a cost-effective way with readily available components) and the magnetic induction (adequate reception at the desired range, may be implemented in a cost-effective way with readily available components).

Both signals should preferably also use the same modulation scheme. The inventors have found that Frequency Shift Keying (FSK) gives good results, and is mostly immune to the fading phenomena that occur in free-space or atmospheric transmissions. In view of the limited amount of data to be conveyed in the target applications, a 2-FSK modulation scheme has been found adequate in embodiments of the present invention.

Preferably, the processing module **130** is adapted to operate with a configurable data rate. In some embodiments, the tag **100** may be configured to operate at a lower data rate when using ultrasound communication than when using magnetic induction.

Preferably, the coding scheme is designed to allow efficient signal clock recovery, regardless of the transmission medium used.

The identification **100** may include a redundancy module (not illustrated), identical to the ultrasound receiver module **110.** In this case, the processing module **130** may be further adapted to process a signal received from that redundancy module in the event of a failure of said receiver module. This setup is more resilient against hardware failures. As the redundancy module is identical to the ultrasound receiver module **110,** the advantages mentioned above with respect to the commonalities between the ultrasound receiver module **110** and the magnetic induction module **120** also apply to the redundancy module.

In a similar way, the identification tag **100** may further comprise a redundancy module (not illustrated) configured to convert the ultrasound signal into a third electrical signal, and the processing module may be adapted to process the first electrical signal and the third electrical signal in a coordinated way. In this case, both (first and third) signals are demodulated in a synchronized way, and the consecutive received symbols of the respective receivers are combined to obtain a better estimate of the transmitted symbol. The identification tag can benefit from vectored receiving methods, such as beam forming or "MIMO" techniques. These methods are particularly useful to overcome impairments in multipath transmission channels, such as free-space acoustic channels.

The functions described hereinabove as pertaining to the processing module **130** may be implemented in dedicated hardware (e.g., ASIC), configurable hardware (e.g., FPGA), programmable components (e.g., a DSP or general purpose processor with appropriate software), or any combination thereof. The same component(s) may also include other functions, including parts of the ultrasound receiver module **110,** parts of the magnetic induction module **120,** and/or part of the transmission module **140.** The present invention also pertains to a computer program, optionally stored on a computer-readable medium, comprising code means adapted to cause a processor to select a signal from among a first input signal and a second input signal, demodulate the selected signal, and extract information therefrom. The code means may further be adapted to produce a location signal from said extracted information.

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

## Claims

1. An identification tag (100) for use in a location system for determining a location of the identification tag in an area to be monitored, the identification tag comprising:
- an ultrasound receiver module (110) configured to convert an ultrasound signal emitted by a first beacon at a first frequency into a first electrical signal, said ultrasound receiver module (110) having a first analog PHY circuit (115);
- a magnetic induction module (120) configured to convert a varying magnetic field emitted by a second beacon at a second frequency into a second electrical signal, said magnetic induction module (120) having a second analog PHY circuit (125); and
- a processing module (130) adapted to decode said first electrical signal and said second electrical signal and to extract information therefrom;
wherein said identification tag is configured to use said extracted information to produce a location signal;
wherein said first frequency is substantially equal to said second frequency; and
wherein said first analog PHY circuit and said second analog PHY circuit are identical circuits.

2. The identification tag (100) according to claim 1, further comprising a redundancy module, identical to said ultrasound receiver module (110), wherein said processing module (130) is further adapted to process a signal received from said redundancy module in the event of a failure of said ultrasound receiver module (110).

3. The identification tag (100) according to claim 1, further comprising a redundancy module configured to convert said ultrasound signal into a third electrical signal, wherein said processing module (130) is further adapted to process said first electrical signal and said third electrical signal in a coordinated way.

4. The identification tag (100) according to any of the preceding claims, wherein said first frequency and said second frequency are substantially equal to 40 kHz.

5. The identification tag (100) according to any of the preceding claims, wherein said analog PHY circuits are adapted to demodulate said first electrical signal and said second electrical signal according to a Frequency Shift Keying (FSK) scheme.

6. The identification tag (100) according to claim 5, wherein said scheme is 2-FSK.

7. The identification tag (100) according to any of the preceding claims, wherein said processing module (130) is further adapted to perform an error detection algorithm or an error correction algorithm on said extracted information.

8. The identification tag (100) according to any of the preceding claims, further comprising a radio transmitter configured to transmit an identification element derived from said first electrical signal.

9. The identification tag (100) according to any of the preceding claims, adapted to modify a sensitivity of said magnetic induction module (120), so as to obtain different detection ranges for said varying magnetic field.

10. A system comprising at least one beacon adapted to emit said ultrasound signal and/or said varying magnetic field, and an identification tag according to any one of the preceding claims.

11. A computer program product comprising code means adapted to cause a processor to select a signal from among a first input signal and a second input signal, decode the selected signal, and extract information therefrom; wherein said first input signal and said second input signal represent respective physical signals having a same base frequency.

12. The computer program product according to claim 9, wherein the code means are further adapted to produce a location signal from said extracted information.
